# EUROPÄISCHE PATENTSCHRIFT

(11) **EP 0 857 278 B1**
(45) Veröffentlichungstag und Bekanntmachung des Hinweises auf die Patenterteilung: **23.01.2002**
(21) Anmeldenummer: 96937208.5
(22) Anmeldetag: 22.10.1996
(51) Int. Cl.: F16M 11/10

(54) **NEIGUNGSADAPTER FÜR EIN TRAGARMSYSTEM**
INCLINATION-ADAPTER FOR A SUPPORT ARM SYSTEM
ADAPTATEUR D'INCLINAISON POUR SYSTEME DE CONSOLE

(30) Priorität: 28.10.1995 DE 19540298
(43) Veröffentlichungstag der Anmeldung: 12.08.1998
(73) Patentinhaber: Rittal-Werk Rudolf Loh GmbH & Co. KG, 35745 Herborn (DE)
(72) Erfinder: REUTER, Wolfgang, D-57299 Burbach 5 (DE)
(74) Vertreter: Fleck, Hermann-Josef, Dr.-Ing.
(86) Internationale Anmeldenummer: EP9604579
(87) Internationale Veröffentlichungsnummer: WO9716677

(56) Entgegenhaltungen:
- DE-A- 2 810 259
- DE-A- 3 410 158
- DE-C- 362 825
- DE-U- 9 418 392
- US-A- 4 693 128
- US-A- 5 335 142

## Beschreibung

Die Erfindung betrifft einen Neigungsadapter für ein Tragarmsystem mit einem mit Stellspindel versehenen Basisteil und einem Neigungskörper, bei dem das Basisteil und der Neigungskörper verschwenkbar miteinander verbunden sind und die Schwenkbewegung über ein von der Stellspindel verstellbares Koppelglied ausführbar ist.

Ein als Stativkopf für eine Fernsehkamera ausgebildeter Neigungsadapter dieser Art ist aus der DE 28 10 259 bekannt. Dabei ist das Basisteil um eine vertikale Achse verschwenkbar und der Neigungskörper um eine horizontale Achse gegenüber dem Basisteil verschwenkbar. Um die Verschwenkung des Neigungskörpers zu erhalten, ist mit der Stellspindel ein als U-Bügel ausgebildetes Koppelglied verstellbar, wobei die Stellspindel im Neigungskörper gelagert ist.

Zwischen den Schenkeln des U-Bügels ist ein mit der Schwenkachse des Neigungskörpers verbundenes Führungsteil angeordnet, das die Verschwenkung steuert.

Ein derartiger Neigungsadapter ist für ein Tragarmsystem nicht geeignet, da er im Aufbau zu kompliziert ist und auch die dort auftretenden Kräfte nicht in ausreichendem Maße aufnehmen und übertragen kann. Es sei nur auf die Anbringung eines Steuergerätes am Ende eines Tragarmes hingewiesen.

Es ist Aufgabe der Erfindung, einen Neigungsadapter der eingangs erwähnten Art zu schaffen, der im Aufbau sehr einfach ist und die bei einem Tragarmsystem geforderten hohen Belastungen aufnehmen und übertragen kann.

Diese Aufgabe wird nach der Erfindung dadurch gelöst, daß das Basisteil und der Neigungskörper Anschlußplatten mit zentrischen Durchbrüchen aufweisen, daß an dem Basisteil und dem Neigungskörper jeweils ein Paar beabstandeter, gegeneinander gerichteter Lagerstege angeformt sind, über die Basisteil und Neigungskörper parallel zu den Anschlußplatten verschwenkbar gelagert sind, und daß die Stellspindel mit einem im Querschnitt runden Mitnehmer des Koppelgliedes in einem Führungsschlitz eines Lagersteges des Neigungskörpers geführt ist, wobei der Führungsschlitz in dem über die Schwenklagerung hinausreichenden Bereich des Lagersteges eingebracht ist.

Basisteil und Neigungskörper sind einfache Teile, die mit ausreichender Stabilität hergestellt werden können. Das Koppelglied kann auf einfache Weise verstellt werden, um die Schwenkbewegung des Neigungskörpers auszuführen, wobei stets eine sichere Kopplung zum Neigungskörper besteht.

Ist nach einer Ausgestaltung vorgesehen, daß die Anschlußplatten und die Lagerstege von den Anschlußseiten des Basisteils und des Neigungskörpers aus mit Aussparungen versehen und im wesentlichen doppelwandig ausgebildet sind, dann lassen sich das Basisteil und der Neigungskörper als einfache Gußteile herstellen, ohne die Stabilität zu beeinträchtigen.

Die Auslegung ist nach einer Ausgestaltung so, daß die Stellspindel in zwei Lagerbuchsen des Basisteils drehbar gelagert ist und daß das Koppelglied zwischen den Lagerbuchsen als Anschläge begrenzt verstellbar ist. Damit wird für den Einsatz des Neigungsadapters in einem Tragarmsystem ein ausreichend großer Schwenkbereich erhalten und die Stellspindel mit dem Koppelglied gleichzeitig am Basisteil festgelegt.

Damit das Koppelglied stets mit dem Neigungskörper im Eingriff bleibt, ist vorgesehen, daß das Koppelglied bei der Verstellung mittels eines seitlichen Anlagesteges des Basisteils unverdrehbar gehalten ist.

Die Schwenklagerung zwischen dem Neigungskörper und dem Basisteil ist nach einer Ausgestaltung so ausgeführt, daß die Lagerstege des Neigungskörpers auf den Außenseiten der Lagerstege des Basisteils angeordnet sind und daß die Lagerstege paarweise mittels Lagerbolzen verschwenkbar miteinander verbunden sind. Die Festlegung der Lagerbolzen ist dabei so vorgenommen, daß die Lagerbolzen im Durchmesser abgesetzt sind, wobei der im Durchmesser größere Abschnitt als Anschlag dient und die Lagerbolzen mittels Madenschraube oder Sicherungsring axial unverschiebbar gehalten sind.

Eine spielfreie Kopplung zwischen dem Koppelglied und dem Neigungskörper wird dadurch erreicht, daß der Führungsschlitz in dem Lagersteg des Neigungskörpers in der Breite auf den Durchmesser des runden Mitnehmers des Koppelgliedes ausgelegt ist und eine begrenzte Verstellung desselben in Richtung zur Schwenkachse zuläßt.

Um einen symmetrischen Schwenkbereich zu erhalten, sieht die Erfindung vor, daß in der Mittelstellung des Koppelgliedes zwischen den Lagerbuchsn des Basisteils die Anschlußplatten von Basisteil und Neigungskörper in parallelen Ebenen liegen und aus dieser Mittelstellung nach beiden Seiten um dieselben Winkel verstellbar sind.

Schließlich ist der Neigungsadapter dadurch abgedeckt, ohne die Durchführung von Kabeln, Schläuchen oder dgl. zu erschweren, daß die Anschlußseiten von Basisteil und Neigungskörper von einer vorzugsweise einteiligen Schutzabdeckung umschlossen sind, die aus Abdeckplatten mit zentrischen Durchbrüchen und einem Faltenbalg besteht.

Die Erfindung wird anhand eines in den Zeichnungen dargestellten Ausführungsbeispiels näher erläutert. Es zeigen:
- Fig. 1: in Seitenansicht den Neigungsadapter in einer Schwenkendstellung,
- Fig. 2: in Seitenansicht den Neigungsadapter in der Mittelstellung mit einer Faltenbalg-Abdeckung,
- Fig. 3: im Schnitt den Neigungsadapter in einer um 90° gegenüber Fig. 2 versetzten Ebene und
- Fig. 4: die Draufsicht auf das bei dem Neigungsadapter nach Fig. 1 bis 3 verwendete Basisteil.

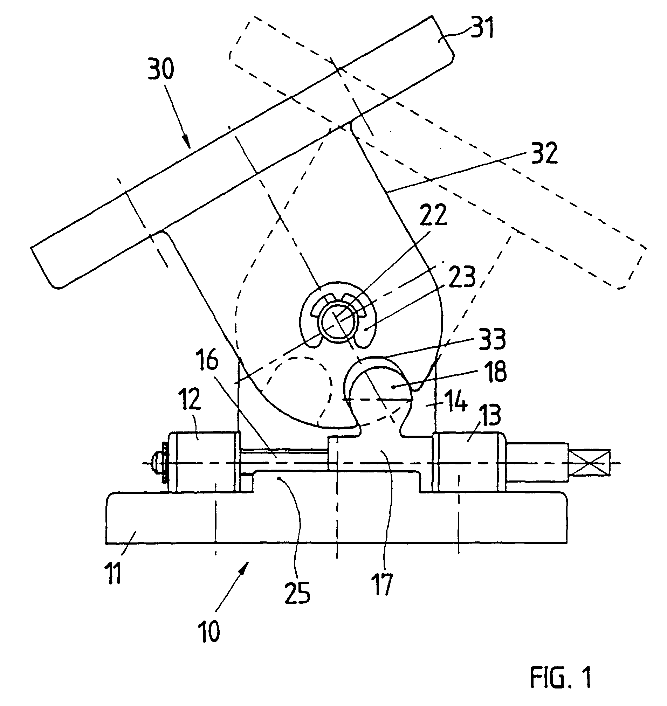

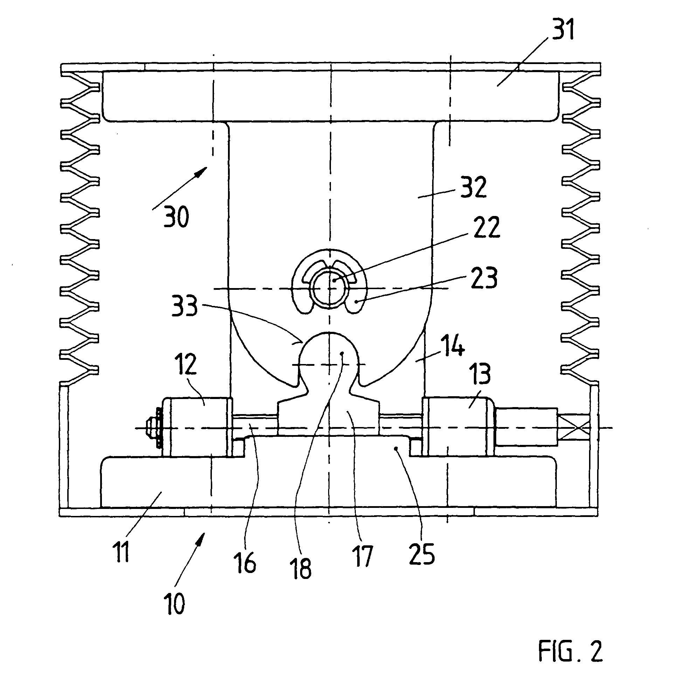

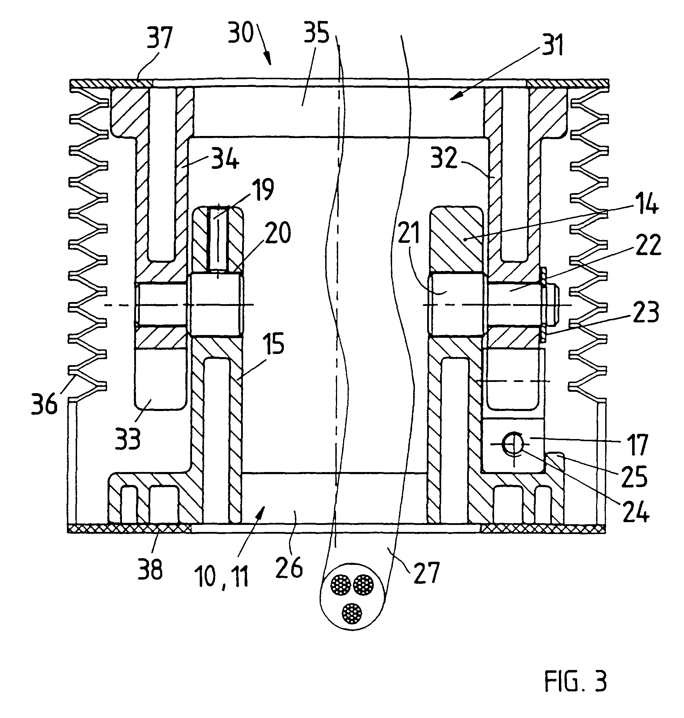

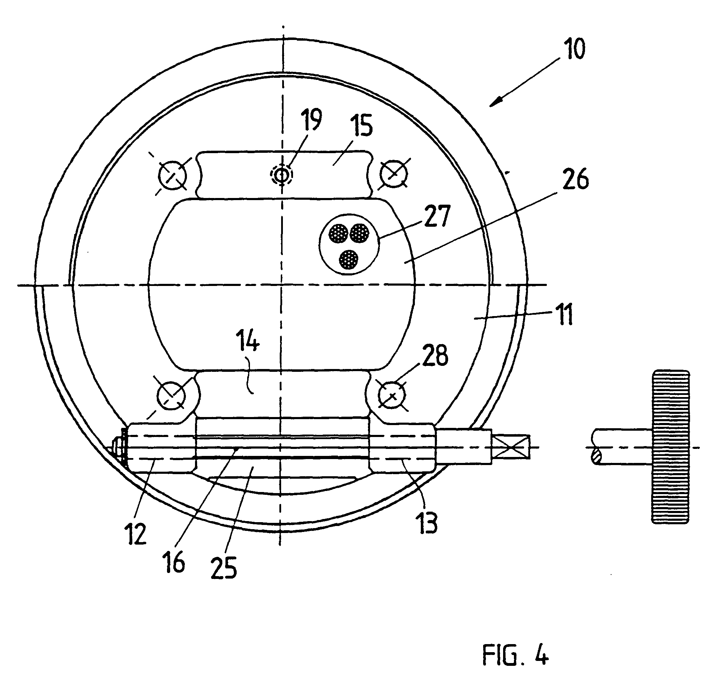

Wie den Fig. 1 und 4 zu entnehmen ist, wird der Neigungsadapter aus einem mit Stellspindel 16 versehenen Basisteil 10 und einem Neigungskörper 30 zusammengesetzt. Beide Teile weisen eine runde Anschlußplatte 11 bzw. 31 auf, die wie Fig. 3 erkennen läßt, von den Anschlußseiten her ausgespart und im wesentlichen doppelwandig ausgebildet sind, um als einfache, kostengünstige und dennoch stabile Gußteile hergestellt werden zu können. Die Stellspindel 16 ist in zwei beabstandeten Lagerbuchsen 12 und 13 des Basisteils 10 gelagert und nimmt zwischen diesen Lagerbuchsen 12 und 13 das mit einer Gewindebohrung 24 versehene Koppelglied 17 verstellbar auf. Damit sich das Koppelglied 17 bei seiner Verstellung nicht verdrehen kann, ist es seitlich durch einen Anlagesteg 25 des Basisteils 10 geführt, wie den Fig. 2 und 3 zu entnehmen ist.

An den Anschlußplatten 11 und 31, die mit zentralen Durchbrüchen 26 bzw. 35 versehen sind, sind Paare von beabstandeten Lagerstegen 14 und 15 bzw. 32 und 34 angeformt, die parallel zueinander ausgerichtet und so angeordnet sind, daß die Lagerstege 32 und 34 des Neigungskörpers 30 sich an die Außenseiten der Lagerstege 14 und 15 des Basisteils 10 anschließen, wie Fig. 3 zeigt.

Zur Schwenklagerung werden Lagerbolzen mit im Durchmesser abgesetzten Abschnitten 21 und 22 verwendet. Die im Durchmesser größeren Abschnitte 21 sind in entsprechend großen Lagerbohrungen der Lagerstege 14 und 15 des Basisteils 10 eingeführt und dienen als axiale Anschläge an den Lagerstegen 32 und 34 des Neigungskörpers 30. Die im Durchmesser kleineren Abschnitte 22 der Lagerbolzen sind in entsprechend ausgelegte Bohrungen der Lagerstege 32 und 34 des Neigungskörpers 30 eingeführt und durch Madenschrauben 19 oder Sicherungsringe 23 axial gesichert. Durch die so schwenkbar miteinander verbundenen Teile des Neigungsadapters lassen sich Kabel 27, Schläuche oder dgl. durchführen, auch wenn der Neigungsadapter mit einer vorzugsweise einteiligen Schutzabdeckung versehen ist, die aus Abdeckplatten 37 und 38 und einem Faltenbalg 36 bestehen kann. Wie Fig. 3 zeigt, sind die Abdeckplatten 37 und 38 dazu ebenfalls mit zentrischen Durchbrüchen versehen.

Wie Fig. 1 zeigt, ist das Koppelglied 17 mit einem im Querschnitt runden Mitnehmer 18 versehen, der in einen Führungsschlitz 33 im Lagersteg 14 des Neigungskörpers 30 eingeführt ist und darin begrenzt in Richtung zur Schwenkachse verstellbar ist. Da beide Lagerstege 32 und 34 mit einem Führungsschlitz 33 versehen sind, kann der Neigungskörper 30 in zwei um 180° versetzten Stellungen mit dem Basisteil 10 verbunden werden, was die Montage des Neigungsadapters vereinfacht. Der Führungsschlitz 33 hat eine Breite, die dem Durchmesser des Mitnehmers 18 des Koppelgliedes 17 entspricht. Die Einbringung der Führungsschlitze 33 in die freien, der Schwenkachse abgekehrten Enden der Lagerstege 32 und 34 ist dabei so, daß in der Mittelstellung des Koppelgliedes 17 nach Fig. 2 die Anschlußplatten 11 und 31 des Basisteils 10 und des Neigungskörpers 30 in parallelen Ebenen liegen, d.h. die Neigung 0°C zueinander einnehmen. Aus dieser Mittelstellung kann das Koppelglied 17 nach beiden Seiten bis zum Anschlag an der Lagerbuchse 12 oder der Lagerbuchse 13 verstellt werden. Dies führt zu gleichen Schwenkwinkeln in beiden Schwenkrichtungen, wie in Fig. 1 angezeigt ist.

Da die Kopplung zwischen dem Neigungskörper 30 und dem Mitnehmer 18 des Koppelgliedes 17 in dem über die Schwenkachse hinausreichenden Bereich der Lagerstege 32 und 34 vorgesehen ist, wird bei einer Verstellung des Koppelgliedes 17 in Fig. 1 nach rechts die Anschlußplatte 31 des Neigungskörpers 30 entgegen dem Uhrzeigersinn verschwenkt, während bei einer Verstellung des Koppelgliedes 17 nach links die Anschlußplatte 31 des Neigungskörpers 30 im Uhrzeigersinn verschwenkt wird und die gestrichelt eingezeichnete Schwenkendstellung einnehmen kann.

Aus Fig. 4 ist schließlich zu entnehmen, wie die Stellspindel 16 am Basisteil 10 gelagert ist und wie die Lagerstege 14 und 15 zum zentrischen Durchbruch 26 stehen. Über die Befestigungsbohrungen 28 der Anschlußplatte 11 kann der Neigungsadapter am Ende eines Tragarmes oder an einem Steuergerät befestigt werden. Wird der Neigungsadapter am Ende eines Tragarmes befestigt, dann sind die Befestigungsbohrungen 28 auf eingeformte Schraubstege des Tragarmes abgestimmt und ausgerichtet.

Die Verstellung der Stellspindel 16 kann auf an sich bekannte Weise mittels Werkzeug, Handkurbel, Stellknopf und dgl. vorgenommen werden.

## Patentansprüche

1. Neigungsadapter für ein Tragarmsystem mit einem mit Stellspindel (16) versehenen Basisteil (10) und einem Neigungskörper (30), bei dem das Basisteil (10) und der Neigungskörper (30) verschwenkbar miteinander verbunden sind und die Schwenkbewegung über ein von der Stellspindel (16) verstellbares Koppelglied (17) ausführbar ist, wobei die Stellspindel (16) mit einem im Querschnitt runden Mitnehmer (18) des Koppelgliedes (17) in einem Führungsschlitz (33) eines Lagerstegs (32) des Neigungskörpers (30) geführt und in zwei Lagerbuchsen (12, 13) des Basisteils (10) drehbar gelagert ist, die als Endanschläge für das Koppelglied (17) ausgebildet sind, wobei der Führungsschlitz (33) in der Breite auf den Durchmesser des runden Mitnehmers (18) ausgelegt ist und eine begrenzte Verstellung desselben in Richtung zur Schwenkachse zuläßt, und wobei der Führungsschlitz (33) in den, über die Schwenklagerung hinausreichenden Bereich des Lagersteges (32) eingebracht ist,
**dadurch gekennzeichnet,**
**dass** das Basisteil (10) und der Neigungskörper (30) Anschlußplatten (11,31) aufweisen, wobei an dem Basisteil und dem Neigungskörper jeweils ein Paar beabstandeter, gegeneinander gerichteter Lagerstege angeformt sind,
**dass** die Anschlußseiten der Anschlußplatten (11, 31) von Basisteil (10) und Neigungskörper (30) von einer Schutzabdeckung umschlossen sind, die aus Abdeckplatten (37,38) mit zentrischen Durchbrüchen und einem Faltenbalg (36) besteht,
**dass** der Faltenbalg (36) die beiden Abdeckplatten (37, 38) verbindet,
**dass** in der Mittelstellung des Koppelgliedes (17) zwischen den Lagerbuchsen (12,13) des Basisteils (10) die Anschlußplatten (11,31) von Basisteil (10) und Neigungskörper (30) in parallelen Ebenen liegen und aus dieser Mittelstellung nach beiden Seiten um dieselben Winkel verstellbar sind, und
**dass** die beiden Lagerstege (32 und 34) des Neigungskörpers (30) jeweils mit einem Führungsschlitz (33) für den Mitnehmer (18) versehen sind.

2. Neigungsadapter nach Anspruch 1,
**dadurch gekennzeichnet,**
**dass** die Anschlußplatten (11,31) und die Lagerstege (14,15; 32,34) von den Anschlußseiten des Basisteils (10) und des Neigungskörpers (30) aus mit Aussparungen versehen und im wesentlichen doppelwandig ausgebildet sind.

3. Neigungsadapter nach Anspruch 1 oder 2,
**dadurch gekennzeichnet,**
**dass** das Koppelglied (17) bei der Verstellung mittels eines seitlichen Anlagesteges (25) des Basisteils (10) unverdrehbar gehalten ist.

4. Neigungsadapter nach einem der Ansprüche 1 bis 3,
**dadurch gekennzeichnet,**
**dass** die Lagerstege (32,34) des Neigungskörpers (30) auf den Außenseiten der Lagerstege des Basisteils (10) angeordnet sind, und
**dass** die Lagerstege paarweise (14,32 bzw. 15,34) mittels Lagerbolzen (20,20a) verschwenkbar miteinander verbunden sind.

5. Neigungsadapter nach Anspruch 4,
**dadurch gekennzeichnet,**
**dass** die Lagerbolzen (20,20a) im Durchmesser abgesetzt sind, wobei der im Durchmesser größere Abschnitt als Anschlag dient und die Lagerbolzen (20,20a) mittels Madenschraube (19) oder Sicherungsring (23) axial unverschiebbar gehalten sind.

## Claims

1. Inclination adapter for a supporting-arm system, having a base part (10), provided with adjusting spindle (16), and an inclination body (30), in the case of which the base part (10) and the inclination body (30) are connected to one another in a pivotable manner and the pivoting movement can be executed via a coupling element (17) which can be adjusted by the adjusting spindle (16), it being the case that the adjusting spindle (16) is guided, by way of a cross-sectionally round carry-along member (18) of the coupling element (17), in a guide slot (33) of a bearing crosspiece (32) of the inclination body (30) and is mounted rotatably in two bearing bushes (12, 13) of the base part (10), which are designed as end stops for the coupling element (17), it being the case that the guide slot (33) is designed widthwise in accordance with the diameter of the round carry-along member (18), and allows limited adjustment of said member in the direction of the pivot axis, and it being the case that the guide slot (33) is introduced into that region of the bearing crosspiece (32) which extends beyond the pivot mounting, **characterized in that** the base part (10) and the inclination body (30) have connection plates (11, 31), in each case one pair of spaced-apart bearing crosspieces which are directed towards one another being integrally formed on the base part and the inclination body, **in that** the connection sides of the connection plates (11, 31) of the base part (10) and the inclination body (30) are enclosed by a protective covering which comprises covering plates (37, 38) with central through-passages and a folding bellows (36), **in that** the folding bellows (36) connect the two covering plates (37, 38), **in that**, with the coupling element (17) in the central position between the bearing bushes (12, 13) of the base part (10), the connection plates (11, 31) of the base part (10) and inclination body (30) are located in parallel planes, and can be adjusted out of this central position through the same angle to both sides, and **in that** the two bearing crosspieces (32 and 34) of the inclination body (30) are each provided with a guide slot (33) for the carry-along member (18).

2. Inclination adapter according to Claim 1, **characterized in that** the connection plates (11, 31) and the bearing crosspieces (14, 15; 32, 34) are provided with cutouts from the connection sides of the base part (10) and of the inclination body (30) and are of essentially double-walled design.

3. Inclination adapter according to Claim 1 or 2, **characterized in that**, during adjustment, the coupling element (17) is retained in a non-rotatable manner by means of a lateral abutment crosspiece (25) of the base part (10).

4. Inclination adapter according to one of Claims 1 to 3, **characterized in that** the bearing crosspieces (32, 34) of the inclination body (30) are arranged on the outsides of the bearing crosspieces of the base part (10), and **in that** pairs of the bearing crosspieces (14, 32 and 15, 34) are connected to one another in a pivotable manner by means of bearing bolts (20, 20a).

5. Inclination adapter according to Claim 4, **characterized in that** the bearing bolts (20, 20a) are of stepped diameter, it being the case that the larger-diameter section serves as a stop and the bearing bolts (20, 20a) are retained in an axially non-displaceable manner by means of a grub screw (19) or securing ring (23).

## Revendications

1. Adaptateur d'inclinaison pour un système de console avec une base (10) munie d'une broche de réglage (16) et un corps inclinable (30), avec lequel la base (10) et le corps inclinable (30) sont reliés entre eux de manière à pouvoir pivoter et le mouvement pivotant peut être réalisé par le biais d'un élément de couplage (17) réglable à l'aide de la broche de réglage (16), la broche de réglage (16) étant guidée avec un tenon d'entraînement (18) de section ronde de l'élément de couplage (17) dans une fente de guidage (33) d'un montant support (32) du corps inclinable (30) et étant logée de manière à pouvoir tourner dans deux douilles supports (12, 13) de la base (10), lesquelles sont réalisées sous la forme de butées de fin de course pour l'élément de couplage (17), la fente de guidage (33) ayant une largeur adaptée au diamètre du tenon d'entraînement rond (18) et autorisant un positionnement limité de celui-ci dans l'axe de pivotement, et la fente de guidage (33) étant logée dans la zone du montant support (32) qui dépasse au-dessus du support de pivotement,
**caractérisé en ce que**
la base (10) et le corps inclinable (30) présentent des plaques de raccordement (11, 31), une paire de montants supports écartés l'un de l'autre et dirigés l'un vers l'autre étant à chaque fois façonnée sur la base et sur le corps inclinable,
que les côtés raccordement des plaques de raccordement (11, 31) de la base (10) et du corps inclinable (30) sont entourés d'un habillage de protection qui se compose de plaques de recouvrement (37, 38) munies de traversées centrales et d'un soufflet (36),
que le soufflet (36) relie les deux plaques de recouvrement (37, 38),
que lorsque l'élément de couplage (17) se trouve en position centrale entre les douilles supports (12, 13) de la base (10), les plaques de raccordement (11, 31) de la base (10) et du corps inclinable (30) se trouvent dans des plans parallèles et elles peuvent être positionnées de chaque côté selon le même angle à partir de cette position centrale, et
que les deux montants supports (32 et 34) du corps inclinable (30) sont chacun munis d'une fente de guidage (33) pour le tenon d'entraînement (18).

2. Adaptateur d'inclinaison selon la revendication 1, **caractérisé en ce que** les plaques de raccordement (11, 31) et les montants supports (14, 15 ; 32, 34) des côtés de raccordement de la base (10) et du corps inclinable (30) comportent des évidements et sont essentiellement réalisés à double paroi.

3. Adaptateur d'inclinaison selon la revendication 1 ou 2, **caractérisé en ce que** l'élément de couplage (17) est maintenu de manière à ne pas pouvoir se tordre au moyen d'un montant d'appui (25) de la base (10).

4. Adaptateur d'inclinaison selon l'une des revendications 1 à 3, **caractérisé en ce que** les montant supports (32, 34) du corps inclinable (30) sont disposés sur les côtés extérieurs du montant support de la base (10) et que les montants supports sont reliés entre eux par paire (14, 32 ou 15, 34) au moyen d'axes supports (20, 20a) de manière à pouvoir pivoter.

5. Adaptateur d'inclinaison selon la revendication 4, **caractérisé en ce que** les axes supports (20, 20a) ont un diamètre étagé, la section ayant le diamètre le plus grand faisant office de butée et les axes supports (20, 20a) étant maintenus avec une vis sans tête (19) ou un circlip (23) de manière à ne pas pouvoir coulisser dans le sens axial.
